Europäisches Patentamt

European Patent Office

Office européen des brevets

(19)

(11) Publication number: **0 017 385**
**B1**

(12) **EUROPEAN PATENT SPECIFICATION**

(45) Date of publication of patent specification: **11.05.83**

(21) Application number: **80300836.6**

(22) Date of filing: **19.03.80**

(51) Int. Cl.³: **G 03 B 1/48,** G 03 B 21/16, G 03 B 27/26

(54) **Film projection gate.**

(30) Priority: **19.03.79 US 21757**

(43) Date of publication of application:
**15.10.80 Bulletin 80/21**

(45) Publication of the grant of the patent:
**11.05.83 Bulletin 83/19**

(84) Designated Contracting States:
**CH DE FR GB**

(56) References cited:
**AT - A - 97 271**
**DE - A - 2 450 417**
**DE - B - 1 237 356**
**DE - C - 425 307**
**DE - C - 550 667**
**DE - C - 892 551**
**US - A - 1 684 304**

(73) Proprietor: **EASTMAN KODAK COMPANY**
**343 State Street**
**Rochester, New York 14650 (US)**

(72) Inventor: **Langworthy, Harold Frederick**
**Kodak Park**
**Rochester New York (US)**

(74) Representative: **Pepper, John Herbert et al,**
**KODAK LIMITED Patent Department P.O. Box 114**
**190 High Holborn**
**London WC1V 7EA (GB)**

Courier Press, Leamington Spa, England.

## Film projection gate

The present invention relates to a film projection gate having a filmcooling structure, for use in projection apparatus such as, for example, a photographic printer.

In projection printers, especially high speed printers, high intensity radiation from the projection light source heats the film and projection gate structure. This can cause film buckling, and, in severe cases, damage to the film.

U.S. patent 1,684,304 and Austrian patent 97,271 show high velocity air nozzles having generally elongated orifices directed at a low angle to the film. However, such low angle nozzles do not remove heated air directly adjacent the film surface. Air from nozzles aimed at a higher angle remove the heated air next to the film but its flow is turbulent and is inefficiently removed when heated. Turbulence can also be caused by irregular structure in the air stream including, for example, portions of the film gate.

An alternative cooling approach is to utilize air directing structure that is light-transparent and thus can be located in the optical projection path, near the film plane.

Although such structures transmit light, they absorb other wavelengths of the radiation emitted by the projection source and thereby add to the heat load in the projection zone. Further, such light-transparent structures must be reasonably near the film plane to achieve reasonable cooling efficiency; and, in such closely-spaced location, the dirt or scratches which accumulate on the light-transparent structures are within the depth of focus of the projection lens and cause degradation of the projected image.

It is the object of the invention to provide a film projection gate having air supply means which efficiently cools film under high heat load conditions.

This object is accomplished by an air supply means which includes a first member having first and second surfaces. The second surface is inclined relative to the film and cooperates with the termination of a third surface to form an elongate orifice as in prior art air nozzles. However, unlike the prior art, the first surface is clampable during projection against the film and the second surface intersects the first surface terminating both surfaces to form the edge of the film gate and to guide the cooling air into Coanda effect attachment with the film.

This structure efficiently cools the film. It is believed that such efficient cooling is caused by the Coanda effect attachment between the moving air and the film which provides intimacy of the moving air molecules to the film surface which, in turn, facilitates excellent heat transfer from the film to the air. This is accomplished with a minimum of turbulence and without the need, and disadvantages of, light transparent guides.

According to a preferred embodiment of the invention, there is provided a second member which is part of a similar air supply means for the opposite surface of the film.

According to a further preferred embodiment, third and fourth members are provided for clamping the margins of the film opposite those respectively clamped by the first and second members and such members also have surfaces inclined relative to the film.

According to a further preferred embodiment said surfaces of the third and fourth members cooperate with seventh and eighth surfaces respectively to form orifices for receiving air leaving the projection zone.

In the subsequent description of preferred embodiments of the present invention, reference is made to the attached drawings which form a part hereof and in which:

Fig. 1 is a top view of the film gate portion of projection apparatus incorporating one embodiment of the present invention;

Fig. 2 is a view of the film projection gate shown in Fig. 1 taken along section line 2—2;

Fig. 3 is an enlarged view of a portion of Fig. 2; and

Fig. 4 is a sectional view similar to Fig. 2, but of an alternative embodiment of film projection gate according to the present invention.

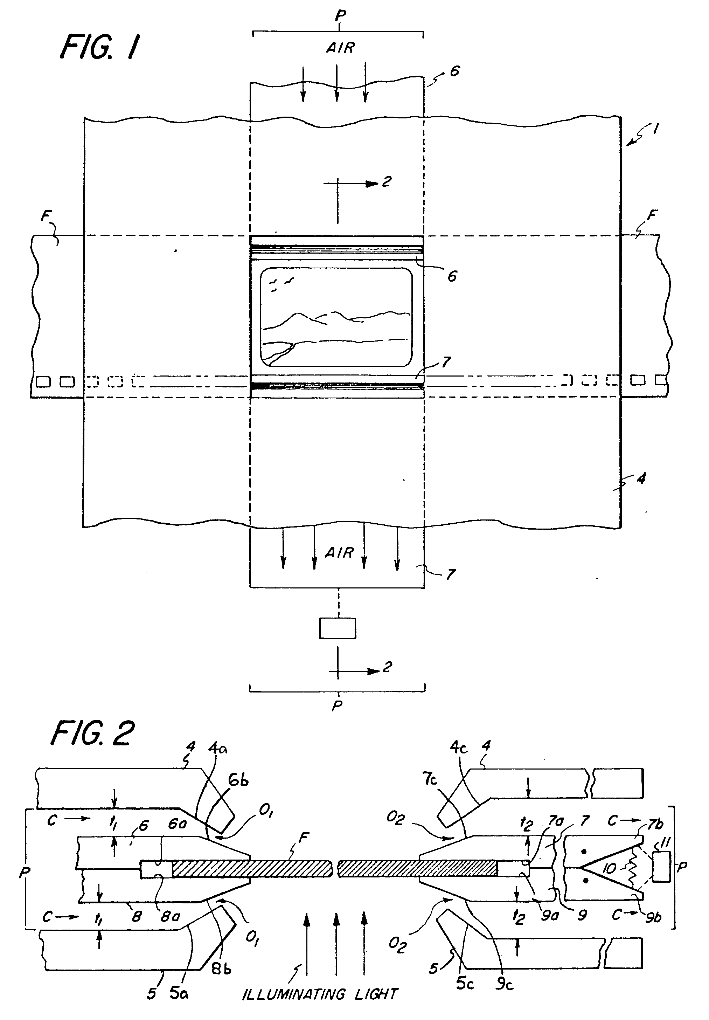

Referring to Figs. 1 and 2 it can be seen that the film gate 1 comprises apertured upper and lower mask plates 4 and 5 respectively, which are mounted within a printer housing by conventional structure (not shown). The apertures of plates 4 and 5 are centred on the axis of projection and define the general boundaries of the projection zone.

A strip of film F, containing images to be projected, is fed by transport means (not shown) to position successive images in the projection zone. The inner surfaces of plates 4 and 5 can be configured to support and guide the film F along a transport path extending to and from the projection zone. The plates 4 and 5 also are configured to provide therebetween an air passage that leads to an edge of the projection zone. As shown in Fig. 1, the air passage P can conveniently be orthogonal to the film transport path.

Mounted within the air passages are film support members 6, 7, 8 and 9 respectively which are shown most clearly in Fig. 2. These film support members respectively comprise clamping recesses 6a, 7a, 8a and 9a formed on respective inner surfaces for contacting respective margins of the film F (i.e. portions not containing image information). Fig. 2 also illustrates that the opposite ends 7b and 9b of the film support members 7 and 9 comprise bevelled cam surfaces. The film support members 7 and 9 are pivotally mounted and can be urged to the film clamping position shown in Fig. 2 by appropriate spring means, illustrated schematically at 10. Appropriate electromagnetic transducer means 11, e.g. a solenoid, is provided to compress the ends against the spring means 10, thus spreading the opposite ends of the film support members 7 and 9 to allow film F to be advanced through the projection zone. The ends of film support members 6 and 8 have a similar configuration (not shown).

As shown most clearly in Fig. 2, outer surfaces 6b, 7c, 8b and 9c respectively of film support members 6, 7, 8 and 9 and inner surfaces 4a, 4c, 5a and 5c respectively of plates 4 and 5 cooperatively form air inlet and outlet conduits C opening along opposite margins of each surface of film F which is supported in the projection zone. More specifically, such surfaces of plate 4 and film support member 6 form an inlet conduit C of thickness $t_1$ which delivers cooling air through an orifice $O_1$ to a location along one margin of the film F and such surfaces of plate 4 and film support member 7 form an outlet conduit C of thickness $t_2$ which has an orifice $O_2$ along the opposite margin of the film F. The surfaces of plate 5 and film support member 8 and plate 5 and film support member 9 form similar air inlet and outlet conduits C and orifices $O_1$ and $O_2$.

In accordance with the present invention, the surfaces of the plates 4 and 5 and film support members 6 and 8, which form the upper and lower orifices $O_1$, are predeterminedly configured and located to cause Coanda effect flow of cooling air across the upper and lower surfaces of film F in the projection zone. In general, Coanda effect flow results when a fluid flow passes from a region in which the constraining walls do not diverge substantially, to a region where the walls do diverge substantially.

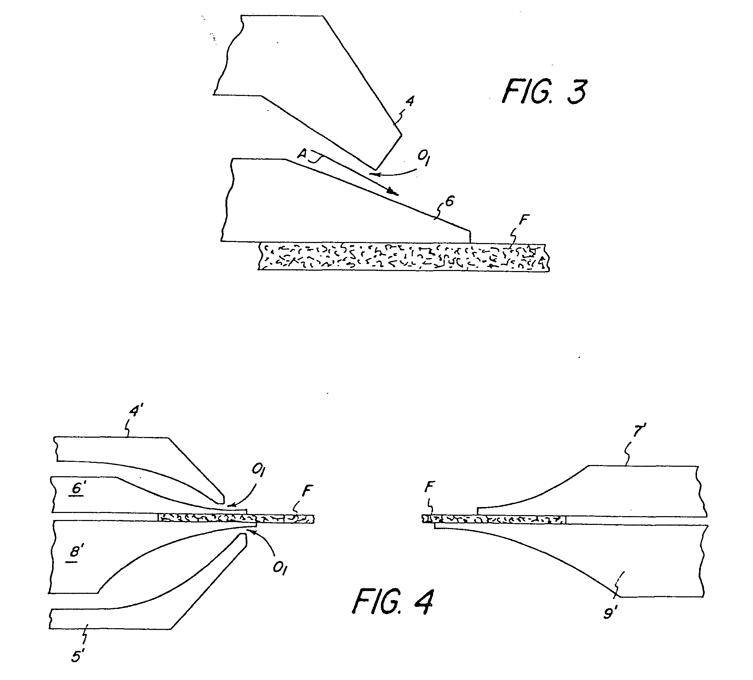

This phenomenon can be understood more clearly by referring to Fig. 3, which is an enlarged view of a portion of the structure shown in Fig. 2. As air A leaves the upper orifice $O_1$, moving air molecules collide with stationary air molecules in the region immediately outside the orifice $O_1$. These collisions impart momentum to the stationary molecules and entrain them in the air flow. Since the entrained molecules move with the exiting air stream, a zone of decreased pressure evolves, which air molecules from both sides of the stream move to equalize. However, pressure equalization is more readily effected in the region above the stream than the region below the stream, because no wall exists in that upper region. The region below the stream is therefore of lesser pressure and this causes the stream to attach to the outer surface of film support member 6. The inner surface of plate 4 is terminated upstream of the terminus of the outer surface of film support member 6 to effect Coanda attachment to the outer surface of film support member 6 prior to engagement with the film F.

As shown, film support member 6 is tapered from the orifice $O_1$ to the film F to direct the already attached air stream into attachment with the upper surface of the film F. It is believed that this is effective because it reduces turbulence at the terminus of the outer surface of film support member 6. Air flow thus proceeds uninterrupted across the surface of the film F and in close relation thereto. The intimate relation of moving air molecules to the film surface facilitates excellent heat transfer from the film F to the air and very effective film cooling is achieved.

Referring back to Fig. 2, it can be seen that orifices $O_2$ are of greater dimension than orifices $O_1$ and that the thickness $t_2$ of the air outlet conduits C is larger than thickness $t_1$ of the air supply conduit C. This arrangement has been found desirable to maintain stable air flow because the entrainment of air molecules increases the volume of air in the stream and decreases stream velocity somewhat.

Having now described the structural features of one preferred embodiment of the present invention, the mode of operation will be readily understood. To initiate an image projection sequence, transducer means 11 (only one of which is shown in Fig. 2) are actuated to open film support members 6 and 8 and 7 and 9 respectively. Film F is advanced to position an image portion to be projected in the exposure plane. During energization of the projection-illuminating source (not shown), air flow is directed to orifices $O_1$ from a pressurized source (not shown), through the inlet conduits C defined by plates 4 and 5, and film support members 6 and 8. This flow moves into Coanda effect attachment with the upper and lower surface of film F at the projection zone by virtue of the orifice configuration described above and thus effectively cools the film F. The cooling air then enters orifices $O_2$ and is discharged from the projection apparatus by the passages formed by plates 4 and 5 and film support members 7 and 9.

A film gate substantially the same as that shown in Figs. 1 and 2 was constructed of dimensions suitable for the projection printing from negatives of 110 size still camera film. The projection apertures defined by plates 4 and 5 were approximately 0.5 inches (12.7 mm) by 0.65 inches (16.5 mm) and the air entrance orifices $O_1$ were approximately 0.010 to 0.015 inches (0.25 to 0.38 mm) in thickness. With an air pressure source in the range of about 3.5 to 10.1 lbs/in$^2$ gauge (24.1 to 69.6 kPa), the film could be maintained in the gate without damage at the varying levels of illumination suitable for print exposure with such film. Such illumination could be maintained well beyond the necessary exposure period; however, if the air was turned off, the film smoked and bubbled within a few seconds. It was observed that during application of air pressure, the air motion near the projection zone (and either above or below the film) is directed toward the film, not away from the film as might be expected in a gate not using this cooling means. It was also found that blocking the projection apertures with glass plates, so as to form closed channels for the air flow, drastically reduced the effectiveness of the air cooling and resulted in film buckling and film damage. It was also found that if large air jets, necessarily spaced from the projection apertures because of the presence of optical components on both sides of the film, were substituted for the configuration described above, film cooling was generally ineffective.

It will be appreciated that this result can be attained by various structures different from those described above. For example, Figure 4 shows an alternative preferred embodiment of film gate according to the present invention in which corresponding parts bear the same numerical designation as in Figures 1 and 2. It will be noted that in Figure 4 the exit orifices are defined only by members 7' and 9'.

Also it will be appreciated that flow of air across the upper and lower surfaces need not be in the same direction. Thus in certain applications the upper and lower air streams could be opposite, orthogonal or otherwise angularly disposed. Also in certain applications flow across only one surface might provide sufficient cooling.

Of course, the film to be cooled need not be in strip or disc form as shown but could be in other forms e.g., sheet form, such as microfiche or slide.

## Claims

1. A film projection gate comprising air supply means for supplying cooling air to film (F) supported in the gate, the air supply means including a first member (6; 6') having a first surface (6a) and a second surface (6b), the second surface (6b) being inclined relative to the surface of the film (F) and combining with the termination of a third surface (4a) to form an elongate orifice (O₁) for supplying cooling air to the film (F), characterised in that the first surface (6a) is clampable during projection against a margin of the film (F) and the second surface (6b) intersects the first surface (6a) terminating both surfaces (6a and 6b) to form the edge of the film gate and to guide the air from the orifice (O₁) into Coanda effect attachment with said surface of the film (F).

2. A film projection gate according to claim 1 further characterised in that the air supply means includes a second member (8; 8') having a fourth surface (8a) and a fifth surface (8b), the fifth surface (8b) being inclined relative to the surface of the film (F) and combining with the termination of a sixth surface (5a) to form another elongate orifice (O₁) for supplying cooling air to the film (F), the fourth surface (8a) being clampable during projection against a margin of the film (F) on the opposite surface of the film (F) and the fifth surface (8b) intersecting the fourth surface (8a) terminating both surfaces (8a and 8b) to form the edge of the film gate and to guide the air from said another orifice (O₁) into Coanda effect attachment with said opposite surface of the film (F).

3. A film projection gate according to claim 2 further characterised by third and fourth members (7, 9; 7', 9') positioned to be clampable during projection against the margins of the film (F) opposite those against which the first and second members (6, 8; 6', 8') are respectively clampable, which members (7, 9; 7', 9') also have surfaces (7c, 9c) inclined relative to film (F) received in the gate.

4. A film projection gate according to claim 3 characterised in that said surfaces of the third and fourth members (7, 9) cooperate with seventh (4c) and eighth (5c) surfaces respectively to form orifices (O₂) for receiving air leaving the projection zone.

## Patentansprüche

1. Filmprojektionsbühne mit einer Luftzuführeinrichtung, die dem in der Projecktionsbühne befindlichen Film (F) zur Kühlung Luft zuführt, wobei die Luftzuführeinrichtung ein erstes Glied (6, 6') mit einer ersten Fläche (6a) und einer zweiten Fläche (6b) aufweist und die zweite Fläche (6b) gegenüber der Oberfläche des Films (F) geneigt verläuft und zusammen mit dem Ende einer dritten Fläche (4a) eine langgestreckte Öffnung (O₁) bildet, durch die dem Film (F) zur Kühlung Luft zugeführt wird, dadurch gekennzeichnet, daß die erste Fläche (6a) während der Projektion an einem Rand des Films (F) festgeklemmt werden kann und die zweite Fläche (6b) die erste Fläche (6a) schneidet, so daß beide Flächen (6a und 6b) in ihrem Endbereich eine Kante der Projektionsbühne bilden und die Luft aus der Öffnung (O₁) in auf dem Coanda-Effekt beruhenden Kontakt mit der Oberfläche des Films (F) lenken.

2. Filmprojektionsbühne nach Anspruch 1, dadurch gekennzeichnet, daß die Luftzuführeinrichtung ein zweites Glied (8, 8') mit einer vierten Fläche (8a) und einer fünften Fläche (8b) aufweist, wobei die fünfte Fläche (8b) gegenüber der Oberfläche des Films (F) geneigt verläuft und zusammen mit dem Ende einer sechsten Fläche (5a) eine weitere langgestreckte Öffnung (O₁) bildet, durch die dem Film (F) zur Kühlung Luft zugeführt wird, wobei die vierte Fläche (8a) während der Projektion an einem Rand des Films (F) an der von dem ersten Gied abgewandten Fläche des Films (F) festgeklemmt werden kann und die fünfte Fläche (8b) die vierte Fläche (8a) Schneidet, so daß beide Flächen (8a und 8b) in ihrem Endbereich eine Kante der Projektionsbühne bilden und die Luft aus der anderen Öffnung (O₁) in auf dem Coanda-Effekt beruhenden Kontakt mit der von dem ersten Glied abgewandten Fläche des Films (F) lenken.

3. Filmprojektionsbühne nach Anspruch 2, dadurch gekennzeichnet, daß ein drittes und ein viertes Glied (7, 9; 7', 9') vorgesehen und so angeordnet sind, daß sie während der Projektion an den Rändern des Films (F) festgeklemmt werden können, die denjenigen gegenüberliegenden, an denen das erste bzw. zweite Glied (6, 8; 6', 8') festklemmbar ist, wobei die Glieder (7, 9; 7', 9') ebenfalls Flächen (7c, 9c) aufweisen, die gegenüber dem in der Projektionsbühne befindlichen Film (F) geneigt verlaufen.

4. Filmprojektionsbühne nach Anspruch 3, dadurch gekennzeichnet, daß die Flächen des dritten und des vierten Gliedes (7, 9) mit einer siebten (4c) bzw. achten Fläche (5c) so zusammenwirken, daß sie Öffnungen (O₂) bilden, in welche die aus dem Projektionsbereich austretende Luft einströmen kann.

**Revendications**

1. Une fenêtre de projection de film comprenant un moyen d'alimentation en air pour fournir de l'air de refroidissement à un film (F) supporté dans la fenêtre, le moyen d'alimentation en air comprenant un premier organe (6, 6') présentant une première surface (6a) et une deuxième surface (6b), cette deuxième surface (6b) étant inclinée sur la surface du film et se combinant avec l'extrémité d'un troisième surface (4a) pour former un orifice allongé (O₁) d'alimentation en air de refroidissement du film (F), caractérisé en ce que la première surface (6a) peut être plaquée contre une marge du film (F) pendant la projection et en ce que la deuxième surface (6b) fait intersection avec la première (6a) en bordant les deux surfaces (6a et 6b) de manière à former le bord de la fenêtre de projection et à guider par effet Coanda l'air venu de l'orifice (O₁) contre ladite surface du film (F).

2. Une fenêtre de projection de film conforme à la revendication 1, caractérisée en outre en ce que le moyen d'alimentation en air comprend un deuxième organe (8; 8') présentant une quatrième surface (8a) et une cinquième surface (8b), la cinquième surface (8b) étant inclinée sur la surface du film (F) et se combinant avec l'extrémité d'une sixième surface (5a) pour délimiter un autre orifice allongé (O₁) d'alimentation en air de refroidissement du film (F), la quatrième surface (8a) pouvant être plaquée contre une marge du film (F) sur la surface opposée du film (F) pendant la projection alors que la cinquième surface (8b) fait intersection avec la quatrième (8a) pour border les deux surfaces (8a et 8b) de manière à délimiter un bord de la fenêtre de projection et à guider par effet Coanda l'air venu de l'autre orifice (O₁) contre ladite surface opposée du film (F).

3. Une fenêtre de projection de film conforme à la revendication 2, caractérisée en outre par des troisième et quatrième organes (7, 9; 7', 9') agencés pour être plaqués pendant la projection contre les marges du film (F) qui sont opposés à celles contre lesquelles les premier et deuxième organes (6, 8; 6', 8') sont respectivement plaqués, ces organes (7, 9; 7', 9') présentant aussi des surfaces (7c, 9c) inclinées sur le film (F) placé dans la fenêtre.

4. Une fenêtre de projection de film conforme à la revendication 3, caractérisé en ce que lesdites surfaces des troisième et quatrième organes (7, 9) coopèrent avec des septième (4c) et huitième (5c) surfaces respectivement, pour délimiter des orifices (O₂) de réception de l'air quittant la zone de projection.

FIG. 1

0017385

FIG. 2

ILLUMINATING LIGHT

1

# 0 017 385

FIG. 3

FIG. 4